# EUROPÄISCHE PATENTSCHRIFT

(11) **EP 1 619 082 B1**
(45) Veröffentlichungstag und Bekanntmachung des Hinweises auf die Patenterteilung: **07.11.2007**
(21) Anmeldenummer: 05015711.4
(22) Anmeldetag: 20.07.2005
(51) Int. Cl.: B60R 19/24

(54) **Kraftfahrzeug mit einer verriegelbaren Rastverbindung für einen Stossfänger**
Vehicle with a lockable snap fastener for a bumper
Véhicule avec une fixation par encliquetage verrouillable pour pare-chocs

(30) Priorität: 21.07.2004 DE 102004035423
(43) Veröffentlichungstag der Anmeldung: 25.01.2006
(73) Patentinhaber: GM Global Technology Operations, Inc., Detroit, MI 48265-3000 (US)
(72) Erfinder: Hock, Theobald, 63762 Grossostheim (DE)
(74) Vertreter: Daniel, Ulrich W.P.

(56) Entgegenhaltungen:
- EP-B- 0 417 654
- DE-A1- 4 432 766
- DE-A1- 10 143 607
- DE-A1- 10 147 621
- DE-A1- 10 225 328

## Beschreibung

Die Erfindung betrifft ein Kraftfahrzeug mit einer Karosserie, die eine Halterung zum Befestigen eines Stoßfängers aufweist, wie im Oberbegriff des Anspruchs 1 angegeben.

Eine derartige Rastverbindung zwischen einem Stoßfänger und einer Halterung an der Karosserie eines Kraftfahrzeuges ist in der DE 101 43 607 A1 beschrieben.

DE 44 32 766 A1 offenbart ein Kraftfahrzeug, bei dem ein Stoßfänger an der Karosserie mit Hilfe von Stützrippen einer Halterung positioniert ist.

Heutzutage werden Stoßfänger in der Regel aus Kunststoffen gefertigt. Diese dehnen sich jedoch bei Wärmeeinwirkung stärker aus als darunter liegende Metallteile der Karosserie.

Der Erfindung liegt daher die Aufgabe zugrunde, ein Kraftfahrzeug der eingangs genannten Art zu schaffen, bei dem die den Stoßfänger und die Halterung verbindenden Rastmittel auch unter Wärmeeinwirkung sicher miteinander verrastet bleiben.

Diese Aufgabe wird mit den Merkmalen des Patentanspruches 1 gelöst. Die Unteransprüche haben vorteilhafte Weiterbildungen der Erfindung zum Gegenstand.

Demnach wird ein Kraftfahrzeug mit einer Karosserie, die eine Halterung zum Befestigen eines Stoßfängers umfasst, bereitgestellt, wobei die Halterung mindestens ein erstes Rastmittel und der Stoßfänger mindestens ein zweites Rastmittel aufweist, die komplementär und zusammensteckbar ausgebildet sind, und wobei beim Ver- und Entrasten des ersten Rastmittels und des zweiten Rastmittels wenigstens eines der Rastmittel quer zur Steckrichtung auslenkbar ist. Ein Schiebeteil ist vorgesehen, das zwischen einer entriegelten Stellung, in der es ein Entrasten durch Auslenken mindestens eines der Rastmittel zulässt, und einer verriegelten Stellung bewegbar ist, in der es das Auslenken blockiert. Die in der entriegelten Stellung des Schiebeteils lösbare Rastverbindung zwischen Halterung und Stoßfänger wird durch Verschieben des Schiebeteils in die verriegelte Stellung blockiert. Erst durch Rückverschieben des Schiebeteils in die entriegelte Stellung ist das mindestens eine Rastmittel wieder auslenkbar, sodass ein Lösen der Rastverbindung zwischen Halterung und Stoßfänger möglich ist. Das Schiebeteil weist des Weiteren ein in Verschieberichtung des Schiebeteils vorstehendes Eingriffsmittel auf, das in der verriegelten Stellung des Schiebeteils in eine entsprechende Aufnahme des Stoßfängers eingreift. Hierdurch wird der Stoßfänger zusätzlich zu der vorstehend beschriebenen verriegelbaren Rastverbindung mit der Halterung verbunden. Bei dem Eingriffsmittel kann es sich beispielsweise um einen Zapfen handeln, der in der verriegelten Stellung in ein Loch des Stoßfängers eingreift. Zudem wäre es auch möglich, das Eingriffsmittel so lang zu gestalten, dass dieses in der verriegelten Stellung des Schiebeteils zusätzlich in eine Aufnahme, wie eine Nut oder ein Loch, der Karosserie eingreift.

Die Erfindung bietet zudem die Möglichkeit, das erste Rastmittel an der Halterung und/oder das zweite Rastmittel an dem Stoßfänger so flexibel auszugestalten, dass es in entriegelter Stellung des Schiebeteils schon bei geringer Krafteinwirkung auslenkbar ist. Dies ist insofern von Vorteil, als dass zum Zusammenstecken von Stoßfänger und Halterung keine hohen Kräfte erforderlich sind, was die Montage erheblich vereinfacht und sicherer gestaltet. Zudem werden Beschädigungen, wie Risse oder dergleichen, an den üblicherweise aus Kunststoff gefertigten Halterungen und Stoßfängern verhindert, die bei zu starr ausgeführten Rastverbindungen auftreten können. Durch das Blockieren der Rastverbindung mithilfe des Schiebeteils kann ein Entrasten der Rastmittel von Stoßfänger und Halterung auch bei Abweichungen von vorgegebenen Maßtoleranzen sicher verhindert werden.

In der EP 0 417 654 B1 und der DE 101 47 621 A1 sind bereits verschiebbare Elemente für Stoßfängerhalterungen beschrieben, diese dienen jedoch nicht zum Blockieren von Rastmitteln im Sinne der vorliegenden Erfindung. In der EP 0 417 654 B1 wird ein Klemmkeil 19 dazu eingesetzt, eine Verlängerung 6 eines Stoßfängers 1 gegen eine an der Karosseriewand 8 befestigte Führungsschiene 11 festzulegen. Ziel hierbei ist die Herstellung einer Klemmverbindung zwischen dem Stoßfänger 1 und der Führungsschiene 11. In der DE 101 47 621 A1 ist ein Riegel 9 mit Fortsätzen 10 offenbart, die, wenn der Riegel 9 in Fahrzeuglängsrichtung verschoben wird, Nasen 11 einer Führung 6 des Stoßfängers 2 hintergreifen. Erst durch Verschieben des Riegels 9 wird der Stoßfänger 1 in horizontaler Richtung in Bezug auf eine an einem Kotflügel 5 des Fahrzeugs befestigte Führung 7 festgelegt.

Vorzugsweise bildet bei dem erfindungsgemäßen Kraftfahrzeug die Halterung eine Führungsschiene zum Führen des Schiebeteils zwischen einer die Rastverbindung blockierenden und einer diese freigebenden Stellung. Weitere Führungen für das Schiebeteil an der Karosserie sind somit nicht notwendig. An der Karosserie des Fahrzeugs müssen daher lediglich Befestigungen für die Halterung vorgesehen werden.

Bei dem erfindungsgemäßen Fahrzeug ist vorzugsweise mindestens eines der Rastmittel der Halterung oder des Stoßfängers als elastischer Arm mit einer Rastnase ausgebildet. Besonders bevorzugt befinden sich ein oder mehrere elastische Arme mit Rastnasen an der Halterung. Beim Zusammenstecken von Halterung und Stoßfänger wird der elastische Arm zunächst quer zur Steckrichtung ausgelenkt, bevor die Rastnase dann durch Rückfedern des elastischen Arms in komplementär ausgebildete Rastmittel des Stoßfängers, beispielsweise in eine entsprechende Aufnahme, wie eine Vertiefung oder einen Durchbruch, eingreifen kann.

Vorzugsweise wird das mindestens eine erste Rastmittel, d.h. das Rastmittel an der Halterung, in verriegelter Stellung des Schiebeteils am Auslenken gehindert bzw. blockiert, sodass es nicht aus dem komplementär ausgebildeten, zweiten Rastmittel des Stoßfängers entrasten kann. Es ist jedoch auch denkbar, das zweite Rastmittel, d.h. das Rastmittel an dem Stoßfänger, zusätzlich oder alternativ zu dem entsprechenden ersten Rastmittel an der Halterung in verriegelter Stellung des Schiebeteils zu blockieren.

Vorzugsweise weist das Schiebeteil einen Vorsprung mit einer ersten Flanke auf, die in verriegelter Stellung dem mindestens einen ersten und/oder zweiten Rastmittel zugewandt ist und dieses blockiert. Beispielsweise kann die erste Flanke in der verriegelten Stellung des Schiebeteils direkt an dem Rastmittel, wie dem elastischen Arm, zum Anliegen kommen und diesen dadurch am Auslenken hindern. Ein Auslenken zum Entrasten kann aber auch unterbunden werden, wenn zwischen der ersten Flanke und dem Rastmittel ein Abstand verbleibt. Des weiteren weist der Vorsprung am Schiebeteil vorzugsweise eine zweite Flanke auf, die sich in Verschieberichtung des Schiebeteils stumpfwinklig an die erste Flanke anschließt. Die stumpfwinklige Anordnung der beiden Flanken in Verschieberichtung verhindert, dass das Schiebeteil mit seinem Vorsprung beim Verschieben in die verriegelte Stellung mit dem Rastmittel, beispielsweise dem elastischen Arm, verkantet. Dies ist insbesondere dann von Bedeutung, wenn die erste Flanke dazu dienen soll, das zu verriegelnde Rastmittel, wenn nötig, in seine verriegelte Endstellung zu drängen.

Die Halterung der erfindungsgemäßen Befestigungsvorrichtung weist vorzugsweise an einer dem Stoßfänger zugewandten Wand Stützrippen zum Abstützen wenigstens eines Teils des Stoßfängers auf. Die Montage des Stoßfängers an der Halterung wird hierdurch vereinfacht.

Bei der erfindungsgemäßen Befestigungsvorrichtung weist das Schiebeteil vorzugsweise mindestens eine Schulter auf, die in der verriegelten Stellung des Schiebeteils an einem Flansch des Stoßfängers anliegt und diesen gegen eine dem Flansch zugewandte Wand der Karosserie drückt. Dies ist insbesondere dann von Vorteil, wenn der Stoßfänger in einem tiefgezogenen Bereich der Karosserie montiert wird, und ein möglichst spaltfreier Übergang von Stoßfängerflansch und Karosserie gewünscht ist.

Vorzugsweise wird das Schiebeteil mittels einer Schraube in seine verriegelte Stellung verschoben und in dieser fixiert.

Vorzugsweise ist bei dem erfindungsgemäßen Kraftfahrzeug ein Flansch des Stoßfängers in eine Fuge zwischen dem mindestens einen, ersten Rastmittel an der Halterung und einer diesem Rastmittel gegenüberliegenden Wand der Karosserie einsteckbar. Durch ihre Lage in der Fuge bleiben beispielsweise als Löcher ausgebildete Rastmittel am Stoßfängerflansch, die mit ersten Rastmitteln an der Halterung zusammenwirken, verdeckt, sodass diese von außen nicht sichtbar sind.

Bei dem Kraftfahrzeug, das Gegenstand der vorliegenden Erfindung ist, handelt es sich vorzugsweise um ein Personenkraftfahrzeug.

Ausführungsbeispiele der Erfindung sind nachstehend anhand von Zeichnungen näher beschrieben. Es zeigen
- Fig. 1: eine Seitenansicht eines Frontstoßfängers 3 eines Kraftfahrzeuges 1, der mithilfe einer Halterung 6 und einem Schiebeteil 9 an einem Kotflügel 5 des Fahrzeugs 1 befestigt ist;
- Fig. 2: eine vergrößerte Darstellung der Halterung 6 und des Schiebeteils 9 nach Fig. 1 in einer teilweise geschnittenen Ansicht gemäß D-D in Fig. 6, wobei sich das Schiebeteil 9 in entriegelter Stellung befindet;
- Fig. 3: dieselbe Ansicht wie Fig. 2, wobei sich das Schiebeteil 9 in verriegelter Stellung befindet;
- Fig. 4: die in Fig. 2 als A-A angegebene Schnittansicht in entriegelter Stellung des Schiebeteils 9;
- Fig. 5: die in Fig. 3 als A-A angegebene Schnittansicht in verriegelter Stellung des Schiebeteils 9;
- Fig. 6: die in Fig. 2 als B-B angegebene Schnittansicht in entriegelter Stellung des Schiebeteils 9;
- Fig. 7: die in Fig. 3 als B-B angegebene Schnittansicht in verriegelter Stellung des Schiebeteils 9;
- Fig. 8: die in Fig. 2 als C-C angegebene Schnittansicht in entriegelter Stellung des Schiebeteils 9;
- Fig. 9: die in Fig. 3 als C-C angegebene Schnittansicht in verriegelter Stellung des Schiebeteils 9;

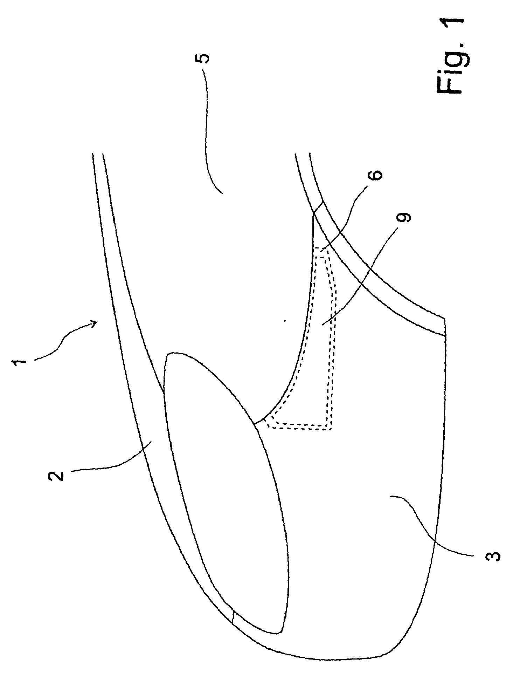

Fig. 1 zeigt eine Seitenansicht des Frontbereichs eines Kraftfahrzeuges 1 mit einer Fahrzeugkarosserie 2 und einem Stoßfänger 3, der mithilfe einer Halterung 6 und einem Schiebeteil 9 im Bereich eines der vorderen Kotflügel 5, der Teil der Fahrzeugkarosserie 2 bildet, montiert ist.

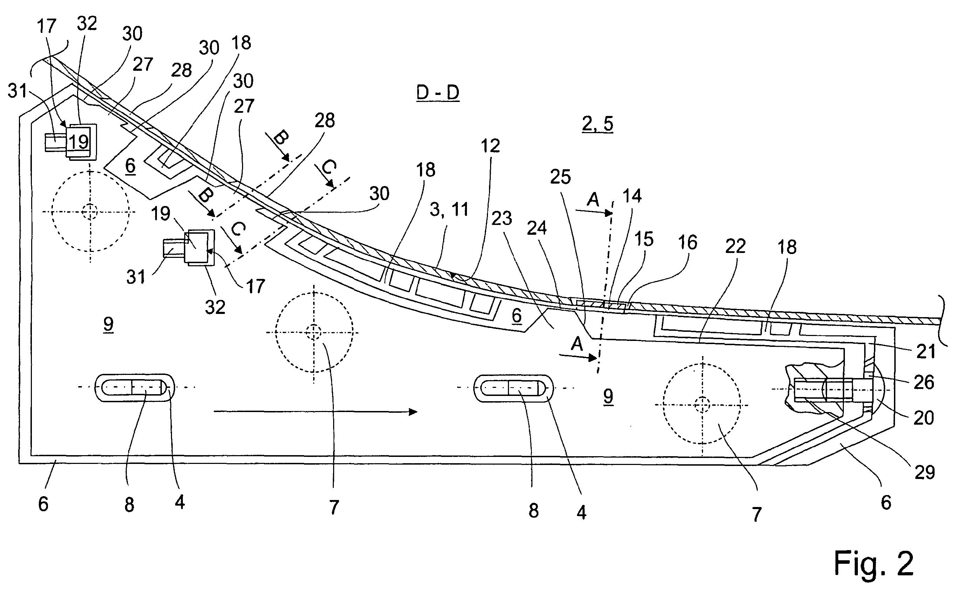

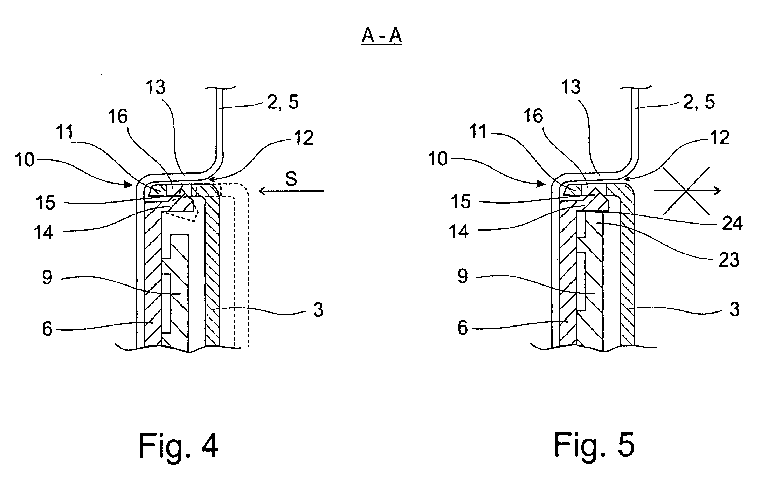

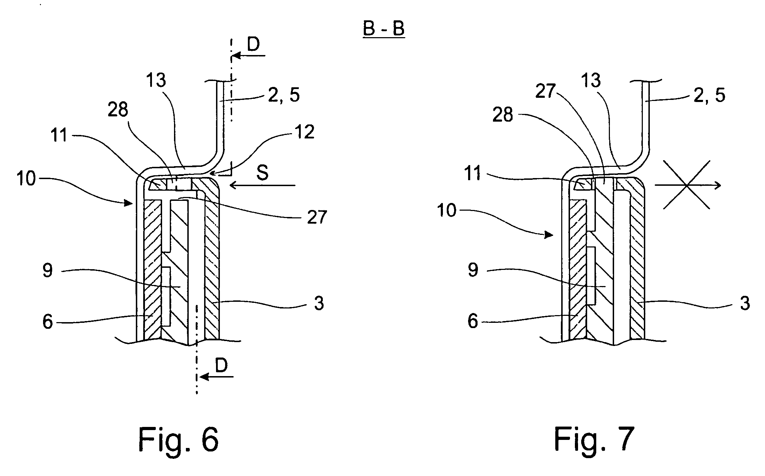

Fig. 2 zeigt eine vergrößerte Ansicht der Halterung 6 und des Schiebeteils 9. Es handelt sich hierbei um eine in Fig. 6 als D-D angegebene Schnittansicht. Die Halterung 6 befindet sich in der in Fig. 2 dargestellten Ansicht hinter dem Schiebeteil 9, von dem es größtenteils verdeckt wird. Bei der Halterung 6 handelt es sich um eine aus Kunststoff gefertigte Platte, deren Oberkante zumindest lokal gekrümmt ist. An den mit der Bezugsziffer 7 bezeichneten Punkten ist die Halterung 6 an dem Kotflügel 5 fest fixiert. Dabei kann es sich beispielsweise um Schraubverbindungen, Rast-, Klebe- oder Schweißverbindungen handeln. Die Halterung 6 umfasst des weiteren senkrecht zur Zeichenebene hervorstehende Stützrippen 18 zur Abstützung des Stoßfängers 3 an der Halterung 6. Die Stützrippen 18 befinden sich in den in der dargestellten Ansicht von dem Schiebeteil 9 unverdeckten Bereichen der Halterung 6. Die Halterung 6 weist des weiteren eine Wand 21 auf, die sich ebenfalls senkrecht zur Zeichenebene erstreckt und ein Durchgangsloch 26 aufweist, durch das eine Schraube 20 geführt ist. Des weiteren umfasst die Halterung 6 Stifte 8 und Bolzen 17 mit Köpfen 19, die sich ebenfalls senkrecht zur Zeichenebene erstrecken. Die dargestellte Ansicht zeigt von den Bolzen 17 lediglich die quaderförmig ausgebildeten Köpfe 19. An der Halterung 6 ist darüber hinaus ein elastischer Arm 14 mit einer Nase 15 ausgebildet, dessen Funktion in Bezug auf Fig. 4 näher erläutert wird.

Bei dem Schiebeteil 9, das in Fig. 2 über der Halterung 6 angeordnet ist, handelt es wie bei der Halterung 6 um eine Platte, die in der Regel aus Kunststoff gefertigt ist. Das Schiebeteil 9 besitzt eine der Halterung 6 ähnliche geometrische Gestalt, es ist jedoch etwas kleiner. Seine Oberkante 22 ist auch lokal gekrümmt wie diejenige der Halterung 6. Das Schiebeteil 9 ist auf der Haltung 6 verschiebbar gelagert. Die Stifte 8 der Halterung 6 greifen in Langlöcher 4 des Schiebeteils 9 ein, sodass das Schiebeteil 9 in horizontaler Richtung an der Halterung 6 geführt ist. Darüber hinaus umfasst das Schiebeteil 9 Nuten 31, die jeweils am rechten ihrer Enden ein Durchgangsloch 32 aufweisen. Bei der Montage des Schiebeteils 9 an der Halterung 6 werden die Köpfe 19 der Bolzen 17 zunächst durch die Durchgangslöcher 32 des Schiebeteils 9 hindurchgeführt. Das Schiebteil 9 wird dann nach rechts verschoben, sodass die Bolzen 17 in die Nuten 31 eingreifen. Die Köpfe 19 der Bolzen 17 hintergreifen das Schiebeteil 9, wodurch dieses in seiner Lage zu der Halterung 6 in einer Richtung senkrecht zur Zeichenebene fixiert wird. Die Halterung 6 bildet somit eine Führungsschiene für das Schiebeteil 9. Des weiteren weist das Schiebeteil 9 an seinem der Wand 21 der Halterung 6 gegenüberliegenden Ende ein Innengewinde 29 auf, in das die Schraube 20 eingreift. Das Schiebeteil 9 kann aus der dargestellten Lage gegenüber der Halterung 6 in die durch den Pfeil angegebene Richtung verschoben werden, indem die Schraube 20 festgezogen wird, wodurch das Schiebeteil 9 in Richtung der Wand 21 der Halterung 6 gezogen wird. Im Bereich der Oberkante 22 des Schiebeteils 9 sind des weiteren eine Rippe 23 und Zapfen 27 mit Schultern 30 ausgebildet, deren Funktion anhand der Fig. 4 bis 9 näher erläutert wird.

Wie aus den Fig. 4 bis 9 zu ersehen, werden die Halterung 6 und das Schiebeteil 9 in einem tiefgezogenen Bereich bzw. einer Verprägung 10 der Fahrzeugkarosserie 2, hier im Bereich des Kotflügels 5, montiert. Die Außenflächen des Stoßfängers 3 und der Karosserie 2 können dadurch bündig aneinander anschließen. Die aus Fig. 2 ersichtliche zumindest lokale Krümmung der Oberkanten der Halterung 6 und des Schiebeteils 9 orientiert sich an dem Verlauf einer den tiefgezogenen Bereich 10 nach oben abschließenden Wand 13 der Karosserie 2, die beispielsweise in Fig. 4 gezeigt ist.

Der Stoßfänger 3 weist, wie in Fig. 4 weiter dargestellt, an seinem oberen Ende einen abgewinkelten Flansch 11 auf, der zur Montage des Stoßfängers 3 am Fahrzeug 1 in eine Fuge 12 zwischen der Halterung 6 und der gegenüberliegenden Wand 13 der Karosserie 2 eingeschoben wird. Die dargestellte Schnittansicht zeigt den an der Halterung 6 ausgebildeten elastischen Arm 14 mit nach oben gerichteten Rastnase 15. Der Stoßfänger 3 weist einen Schlitz 16 zur Aufnahme der Rastnase 15 auf. Beim Einschieben des Flansches 11 in dargestellter Steckrichtung S wird der elastische Arm 14 wie in unterbrochener Linie dargestellt zunächst quer zur Steckrichtung S nach unten ausgelenkt, bevor die Rastnase 15 des elastischen Arms 14 dann durch Rückfedern des elastischen Arms 14 in den Schlitz 16 einrastet. Umgekehrt kann durch Herausziehen des Stoßfängerflansches 11 aus der Fuge 12 die Rastverbindung zwischen dem Stoßfänger 3 und der Halterung 6 wieder gelöst werden.

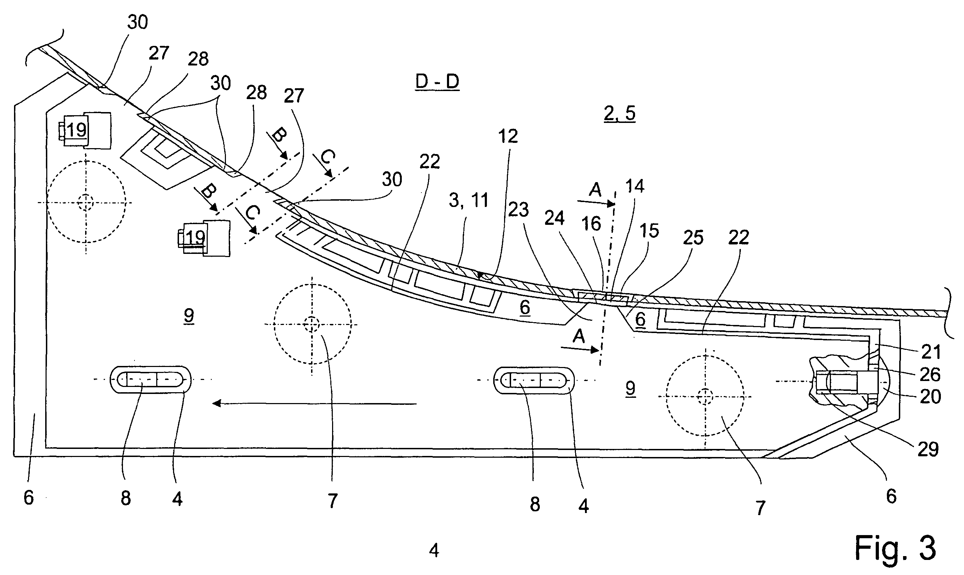

Sind der Stoßfänger 3 und die Halterung 6, wie in Fig. 4 dargestellt, miteinander verrastet, so wird als nachfolgender Montageschritt das Schiebeteil 9 aus einer in Fig. 2 dargestellten Ausgangsstellung gegenüber der Halterung 6 nach rechts in eine in Fig. 3 dargestellte Endstellung verschoben. Dies geschieht mithilfe der Schraube 20, die beim Festziehen das Schiebeteil 9 an die Wand 21 der Halterung heranzieht und das Schiebeteil 9 dann in der Endstellung fixiert. Es ist jedoch auch denkbar, das Schiebeteil 9 manuell zu verschieben.

Durch das Verschieben des Schiebeteils 9 aus der in Fig. 2 dargestellten Ausgangsstellung in die in Fig. 3 dargestellte Endstellung wird die Rippe 23 des Schiebeteils 9 so verschoben, dass diese, wie in Fig. 5 dargestellt, an der Unterseite des elastischen Arms 14 zum Anliegen kommt. Dadurch kann der elastische Arm 14 nicht mehr nach unten ausgelenkt werden. Er ist blockiert. Die Rastnase 15 kann aus dem Schlitz 16 somit nicht mehr entrasten. Die Rastverbindung zwischen dem Stoßfänger 3 und der Halterung 6 ist somit verriegelt. Der Stoßfängerflansch 11 kann aus der Fuge 12 nicht mehr herausgezogen werden. Die in den Fig. 3 und 5 dargestellte Endstellung des Schiebeteils 9 wird daher als seine verriegelte Stellung bezeichnet und die in den Fig. 2 und 4 darstellte Ausgangsstellung als seine entriegelte Stellung. Durch Lösen der Schraube 20 und Rückverschieben des Schiebeteils 9 kann dieses von der verriegelten Stellung der Fig. 3 in die in Fig. 2 dargestellte entriegelte Stellung gebracht werden.

Ein Auslenken des elastischen Arms 14 kann abweichend von der in Fig. 5 dargestellten Ausführung auch blockiert werden, wenn die Verriegelungsrippe 23 nicht direkt zum Anliegen an die Unterseite des elastischen Armes 14 kommt, sondern zwischen beiden ein Abstand verbleibt, bei welchem jedoch sichergestellt sein muss, dass der elastische Arm 14 nicht soweit auslenken kann, dass es zum Entrasten der Rastnase 15 aus dem Schlitz 16 kommt.

Wie in der Fig. 2 gezeigt, besitzt die Verriegelungsrippe 23 eine erste Flanke 24, die dem elastischen Arm 14 zugewandt ist, und ein zweite Flanke 25, die sich in Verschieberichtung des Schiebeteils 9 stumpfwinklig an die erste Flanke 24 anschließt. Die zweite Flanke 25 kann, wenn notwendig, dazu dienen, den elastischen Arm 14 mit der Rastnase 15 in seine verriegelte Endlage zu drängen. Durch die stumpfwinklige Anordnung der zweiten Flanke 25 an die erste Flanke 24 wird beim Verschieben des Schiebeteils 9 ein Verhaken der Verriegelungsrippe 23 mit dem elastischen Arm 14 verhindert.

Durch das Verschieben des Schiebeteils 9 aus der in Fig. 2 dargestellten entriegelten Stellung in die in Fig. 3 dargestellte verriegelte Stellung werden noch weitere Einrichtungen zum Fixieren des Stoßfängers 3 aktiviert:

Durch Verschieben des Schiebeteils 9 von der in Fig. 2 dargestellten entriegelten Stellung in die in Fig. 3 dargestellte verriegelte Stellung werden die in Verschieberichtung hervorstehenden Zapfen 27 am Schiebeteil 9 in Langlöcher 28 des Stoßfängerflansches 11 eingeschoben. Die Fig. 6 zeigt eine entsprechende Schnittansicht entlang der Linie B-B von Fig. 2. Das Schiebeteil 9 befindet sich in seiner in Fig. 2 gezeigten Ausgangsstellung. In dieser sind der Zapfen 27 des Schiebeteils 9 und das Langloch 28 im Stoßfängerflansch 11 noch nicht miteinander in Eingriff gebracht. Fig. 7 zeigt das Schiebeteil 9 in seiner Endlage nach dem Verschiebevorgang in derselben Schnittansicht wie Fig. 6. In dieser Lage greift der Zapfen 27 des Schiebeteils 9 in das Langloch 28 des Stoßfängerflansches 11 ein. Das Verschieben des Schiebeteils 9 in die in etwa horizontale Verschieberichtung hat somit auch ein vertikales Verschieben des Zapfens 27 nach oben bewirkt. Hierdurch wird der Stoßfängerflansch 3 zusätzlich neben der in den Fig. 4 und 5 gezeigten, direkten Rastverbindung zwischen der Halterung 6 und dem Stoßfängerflansch 11 mittelbar über das Schiebeteil 9 mit der Halterung 6 verbunden. Es besteht auch die Möglichkeit, was jedoch in den Fig. 6 und 7 nicht dargestellt ist, die Zapfen 27 so zu verlängern, dass diese in verriegelter Stellung des Schiebeteils 9 zusätzlich in entsprechende Aufnahmen, wie beispielsweise Nuten oder ebenfalls Langlöcher, der Karosserie 2 eingreifen.

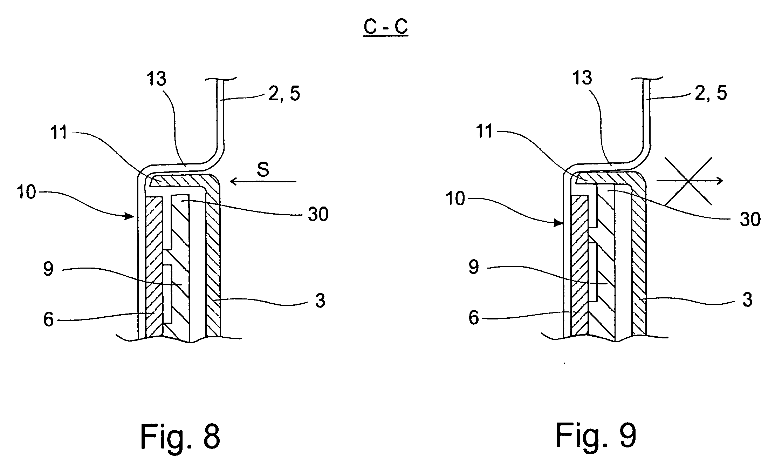

Durch Verschieben des Schiebeteils 9 von der in Fig. 2 dargestellten Ausgangsstellung in die in Fig. 3 dargestellte Endstellung wird noch einer weiterer Befestigungsmechanismus für den Stoßfängerflansch 11 aktiviert. Fig. 8 zeigt eine in Fig. 2 als C-C angegebene Schnittansicht einer der Schultern 30, die an dem Schiebeteil 9 links und rechts der Zapfen 27 ausgebildet sind. In Fig. 8 befindet sich das Schiebteil 9 in seiner Ausgangsstellung. Fig. 9 zeigt die gleiche Schnittansicht wie Fig. 8, hier befindet sich das Schiebteil 9 jedoch in seiner Endlage nach dem Verschiebevorgang. In dieser Lage liegt die Schulter 30 an der Unterseite des Stoßfängerflansches 11 an und drückt diesen gegen die dem Stoßfängerflansch 11 zugewandte Wand 13 der Karosserie. Durch den Verschiebevorgang des Schiebeteils 9 wird die Schulter 30 somit auch in vertikaler Richtung nach oben versetzt. Um Beschädigungen des Lackes durch Reibung zwischen dem Stoßfängerflansch 11 und der Wand 13 der Karosserie 3 zu vermeiden, kann eine nicht dargestellte Schutzschicht aus Kunststoff vorgesehen werden.

Abweichend von den in den Fig. 1 bis 9 dargestellten Ausführungsformen der Halterung 6 und des Schiebeteils 9 sind auch Ausführungsformen denkbar, die eine andere als die dargestellte Anzahl von Rastmitteln 14, 15, 16, Zapfen 27 und Zapfenschultern 30 aufweisen.

### Bezugszeichenliste

- Kraftfahrzeug: 1
- Karosserie: 2
- Stoßfänger: 3
- Langloch: 4
- Kotflügel: 5
- Halterung: 6
- Befestigungspunkt: 7
- Stift: 8
- Schiebeteil: 9
- Tiefgezogener Bereich: 10
- Stoßfängerflansch: 11
- Fuge: 12
- Wand d. Karosserie: 13
- Elastischer Arm: 14
- Rastnase: 15
- Schlitz: 16
- Bolzen: 17
- Stützrippe: 18
- Kopf d. Bolzens: 19
- Schraube: 20
- Wand d. Halterung: 21
- Oberkante: 22
- Verriegelungsrippe: 23
- Erste Flanke: 24
- Zweite Flanke: 25
- Durchgangsloch: 26
- Zapfen: 27
- Langloch: 28
- Innengewinde: 29
- Schulter: 30
- Nut: 31
- Durchgangsloch: 32

## Patentansprüche

1. Kraftfahrzeug (1) mit einer Karosserie (2), die eine Halterung (6) zum Befestigen eines Stoßfängers (3) aufweist, wobei die Halterung (6) mindestens ein erstes Rastmittel (14) und der Stoßfänger (3) mindestens ein zweites Rastmittel (16) aufweist, die komplementär und zusammensteckbar ausgebildet sind, und wobei beim Ver- und Entrasten des ersten (14) und des zweiten Rastmittels (14, 16) wenigstens eines (14) der Rastmittel (14, 16) quer zur Steckrichtung auslenkbar ist, und bei der ein Schiebeteil (9) zwischen einer entriegelten Stellung, in der es ein Entrasten **durch** Auslenken mindestens eines (14) der Rastmittel (14, 16) zulässt, und einer verriegelten Stellung bewegbar ist, in der es das Auslenken blockiert **dadurch gekennzeichnet, dass** das Schiebeteil (9) ein in Verschieberichtung des Schiebeteils (9) vorstehendes Eingriffsmittel (27), insbesondere einen Zapfen (27), aufweist, das in der verriegelten Stellung des Schiebeteils (9) in eine entsprechende Aufnahme (28), insbesondere ein Loch (28), des Stoßfängers (3) eingreift.

2. Kraftfahrzeug (1) nach Anspruch 1, **dadurch gekennzeichnet, dass** die Halterung (6) eine Führungsschiene für das Schiebeteil (9) bildet.

3. Kraftfahrzeug (1) nach Anspruch 1 oder 2, **dadurch gekennzeichnet, dass** das mindestens eine erste Rastmittel (14) an der Halterung (6) in verriegelter Stellung des Schiebeteils (9) am Auslenken gehindert ist.

4. Kraftfahrzeug (1) nach einem der vorangehenden Ansprüche, **dadurch gekennzeichnet, dass** mindestens eines (14) der Rastmittel (14, 16) als elastischer Arm (14) mit einer Rastnase (15) ausgestaltet ist.

5. Kraftfahrzeug (1) nach einem der vorangehenden Ansprüche, **dadurch gekennzeichnet, dass** das Schiebeteil (9) einen Vorsprung (23) mit einer ersten Flanke (24), die in verriegelter Stellung dem mindestens einen zu blockierenden Rastmittel (14) zugewandt ist, und einer zweiten Flanke (25) aufweist, die sich in Verschieberichtung des Schiebeteils (9) stumpfwinklig an die erste Flanke (24) anschließt.

6. Kraftfahrzeug (1) nach einem der vorangehenden Ansprüche, **dadurch gekennzeichnet, dass** die Halterung (6) an einer dem Stoßfänger (3) zugewandten Wand Stützrippen (18) für den Stoßfänger (3) aufweist.

7. Kraftfahrzeug (1) nach einem der vorhergehenden Ansprüche, **dadurch gekennzeichnet, dass** das Eingriffsmittel (27) ausgebildet ist, um in verriegelter Stellung des Schiebeteils (9) zusätzlich in eine Aufnahme der Karosserie (2) eingreifen zu können.

8. Kraftfahrzeug (1) nach einem der vorangehenden Ansprüche, **dadurch gekennzeichnet, dass** das Schiebeteil (9) mindestens eine Schulter (30) aufweist, die in der verriegelten Stellung des Schiebeteils (9) an einem Flansch (11) des Stoßfängers (3) anliegt und diesen gegen eine dem Flansch (11) zugewandte Wand (13) der Karosserie (2) drückt.

9. Kraftfahrzeug (1) nach einem der vorangehenden Ansprüche, **dadurch gekennzeichnet, dass** das Schiebeteil (9) mittels einer Schraube (20) in seine verriegelte Stellung verschiebbar und in dieser fixierbar ist.

10. Kraftfahrzeug (1) **dadurch gekennzeichnet, dass** ein Flansch (11) des Stoßfängers (3) in eine Fuge (12) zwischen dem ersten Rastmittel (14) der Halterung (6) und einer diesem Rastmittel (14) gegenüberliegenden Wand (13) der Karosserie (2) einsteckbar ist.

## Claims

1. Motor vehicle (1) with a body (2) which has a mounting device (6) for fastening a bumper (3), wherein the mounting device (6) has at least one first latching means (14) and the bumper (3) has at least one second latching means (16), which means are formed in a complementary manner and such that they can be fitted together, and wherein at least one (14) of the latching means (14, 16) can be deflected transversely to the direction of connection when the first (14) and the second latching means (14, 16) are latched and unlatched, and in which a sliding part (9) can be moved between an unlocked position, in which it permits unlatching to take place through the deflection of at least one (14) of the latching means (14, 16), and a locked position, in which it blocks deflection, **characterised in that** the sliding part (9) has an engagement means (27), in particular a stud (27), which projects in the direction of displacement of the sliding part (9) and engages in a corresponding receiving means (28), in particular a hole (28), of the bumper (3) when the sliding part (9) is in the locked position.

2. Motor vehicle (1) according to Claim 1, **characterised in that** the mounting device (6) forms a guide rail for guiding the sliding part (9).

3. Motor vehicle (1) according to Claim 1 or 2, **characterised in that** the at least one first latching means (14) on the mounting device (6) is prevented from deflecting when the sliding part (9) is in the locked position.

4. Motor vehicle (1) according to any one of the preceding Claims, **characterised in that** at least one (14) of the latching means (14, 16) is configured as a resilient arm (14) with a latching lug (15).

5. Motor vehicle (1) according to any one of the preceding Claims, **characterised in that** the sliding part (9) has a projection (23) with a first edge (24) which, in the locked position, faces the at least one latching means (14) to be blocked, and a second edge (25) which adjoins the first edge (24) at an obtuse angle in the direction of displacement of the sliding part (9).

6. Motor vehicle (1) according to any one of the preceding Claims, **characterised in that** the mounting device (6) has support ribs (18) for the bumper (3) on a wall which faces the bumper (3).

7. Motor vehicle (1) according to any one of the preceding Claims, **characterised in that** the engagement means (27) is formed such that it can additionally engage in a receiving means of the body (2) when the sliding part (9) is in the locked position.

8. Motor vehicle (1) according to any one of the preceding Claims, **characterised in that** the sliding part (9) has at least one shoulder (30) which, when the sliding part (9) is in the locked position, lies against a flange (11) of the bumper (3) and presses this against a wall (13) of the body (2) which faces the flange (11).

9. Motor vehicle (1) according to any one of the preceding Claims, **characterised in that** the sliding part (9) can be displaced into its locked position and fixed in this by means of a screw (20).

10. Motor vehicle (1), **characterised in that** a flange (11) of the bumper (3) can be inserted in a gap (12) between the first latching means (14) of the mounting device (6) and a wall (13) of the body (2) which lies opposed to this latching means (14).

## Revendications

1. Véhicule (1) doté d'une carrosserie (2) comprenant une fixation (6) pour fixer un pare-chocs (3), la fixation (6) présentant au moins un premier moyen d'encliquetage (14) et le pare-chocs (3) au moins un deuxième moyen d'encliquetage (16) formés de manière complémentaire et de manière à s'imbriquer l'un dans l'autre et au moins un (14) des moyens d'encliquetage (14, 16) pouvant être dévié à la transversale de la direction d'assemblage en cas de verrouillage et de déverrouillage du premier moyen d'encliquetage (14) et du deuxième moyen d'encliquetage (16) et dans le cas duquel, une pièce coulissante (9) qui est mobile entre une position déverrouillée dans laquelle elle permet à au moins l'un (14) des moyens d'encliquetage (14, 16) de s'encliqueter par déviation et une position verrouillée dans laquelle elle bloque la déviation, **caractérisé en ce que** la pièce coulissante (9) présente un moyen d'attaque (27), notamment un tourillon (27), faisant saillie dans la direction de déplacement de la pièce coulissante (9) et s'engageant dans un logement (28) correspondant, notamment un trou (28), du pare-chocs (3) en position verrouillée de la pièce coulissante (9).

2. Véhicule (1) selon la revendication 1, **caractérisé en ce que** la fixation (6) forme un rail de guidage pour la pièce coulissante (9).

3. Véhicule (1) selon la revendication 1 ou 2, **caractérisé en ce que** l'au moins un premier moyen d'encliquetage (14) sur la fixation (6) est bloqué dans sa déviation en position verrouillée de la pièce coulissante (9).

4. Véhicule (1) selon l'une quelconque des revendications précédentes, **caractérisé en ce qu'**au moins un (14) des moyens d'encliquetage (14, 16) est conçu sous forme de bras élastique (14) avec un tenon d'encliquetage (15).

5. Véhicule (1) selon l'une quelconque des revendications précédentes, **caractérisé en ce que** la pièce coulissante (9) présente une saillie (23) dotée d'un premier flanc (24) tourné en position verrouillée vers l'au moins un moyen d'encliquetage (14) à bloquer, et d'un deuxième flanc (25) qui se raccorde à angle obtus au premier flanc (24) dans la direction de déplacement de la pièce coulissante (9).

6. Véhicule (1) selon l'une quelconque des revendications précédentes, **caractérisé en ce que** la fixation (6) sur une paroi tournée vers le pare-chocs (3) présente des nervures-supports (18) pour le pare-chocs (3).

7. Véhicule (1) selon l'une quelconque des revendications précédentes, **caractérisé en ce que** le moyen d'attaque (27) est conçu pour pouvoir s'engager en complément dans un logement de la carrosserie (2) en position verrouillée de la pièce coulissante (9).

8. Véhicule (1) selon l'une quelconque des revendications précédentes, **caractérisé en ce que** la pièce coulissante (9) présente au moins un épaulement (30) se trouvant en position verrouillée de la pièce coulissante (9) sur un flanc (11) du pare-chocs (3) et appuyant ce dernier contre une paroi (13) de la carrosserie (2) tournée vers le flanc (11).

9. Véhicule (1) selon l'une quelconque des revendications précédentes, **caractérisé en ce que** la pièce coulissante (9) peut être déplacée dans sa position verrouillée à l'aide d'une vis (20) et y être fixée.

10. Véhicule (1), **caractérisé en ce qu'**un flanc (11) du pare-chocs (3) peut être enfoncé dans une jointure (12) entre le premier moyen d'encliquetage (14) de la fixation (6) et une paroi (13) de la carrosserie (2) opposée à ce moyen d'encliquetage (14).
